# DEMANDE DE BREVET EUROPEEN

(11) **EP 0 914 916 A1**
(43) Date de publication de la demande: **12.05.1999**
(21) Numéro de dépôt: 97810826.4
(22) Date de dépôt: 04.11.1997
(51) Int. Cl.: B29B 15/10

(54) **Procédé pour produire un matériau composite**

(71) Demandeur: Materials Technics Société Anonyme Holding, 1631 Luxembourg (LU)
(72) Inventeur: Caramaro, Laurence, 01480 Chaleins (FR); Lamure, Gérard, 01700 Beynost (FR)
(74) Mandataire: Savoye, Jean-Paul

(57) **Abrégé**

Ce procédé pour produire un matériau composite comprend un réseau de fibres ou de filaments et une matrice continue, rigide ou flexible, avec laquelle ledit réseau est en contact intime. Selon ce procédé, ladite matrice est incorporée dans ledit réseau sous forme de poudre avant d'être transformée pour former ladite matrice continue. A cet effet, on place la poudre, d'une part et ledit réseau de fibres ou de filaments, d'autre part, dans un champ électrostatique dont la tension est d'au moins 20 kV pendant une durée d'au moins 5 s.

## Description

La présente invention se rapporte à un procédé pour produire un matériau composite comprenant un réseau de fibres ou de filaments en un matériau susceptible d'être imprégné par une poudre et une matrice continue, rigide ou flexible, avec laquelle ledit réseau est en contact intime. Cette invention se rapporte non seulement au matériau composite obtenu par ce procédé, mais également à une préforme pour matériau composite obtenue selon ce procédé.

Les matériaux composites renforcés par des fibres noyées dans des matrices thermoplastiques sont une catégorie de matériaux extrêmement intéressante, permettant notamment de réaliser des matériaux présentant d'excellentes propriétés mécaniques pour des masses sensiblement inférieures à celles des métaux. En outre, ces matériaux sont obtenus par simple moulage, après avoir enrobé les fibres ou filaments de renfort de la résine thermoplastique destinée à constituer la matrice du matériau composite. Bien évidemment, les propriétés mécaniques du matériau composite ainsi obtenu sont fonction de la qualité de l'interface entre les fibres ou filaments de renfort et la matrice.

Ceci suppose donc une bonne cohésion entre les fibres ou les filaments et la matrice. Deux facteurs permettent essentiellement de déterminer cette cohésion, il s'agit d'une part des propriétés d'adhésion entre la résine et les fibres ou filaments de renfort, c'est-à-dire du choix de la matière destinée à former la matrice et, d'autre part, du taux de vide à l'intérieur du composite. Ce second facteur résulte évidemment de la capacité que la résine présente pour s'infiltrer entre les fibres ou les filaments de la masse fibreuse. En effet, chaque fibre ou filament ou chaque portion de fibre ou de filament qui ne se trouve pas enrobée dans la matrice ne participe pas ou ne participe que partiellement aux propriétés mécaniques du matériau composite. Par conséquent, le taux de vide réduit d'autant les propriétés mécaniques du matériau composite.

Dans les procédés classiques proposés pour incorporer la résine thermoplastique à la masse fibreuse ou filamenteuse, on fond la résine pour la faire pénétrer à l'état liquide dans la masse fibreuse ou filamenteuse à imprégner, après quoi on peut mouler cette masse fibreuse ainsi imprégnée pour lui donner la forme de la pièce en matériau composite que l'on désire obtenir. L'inconvénient de cette solution provient de la difficulté à faire parfaitement pénétrer la résine fondue entre les fibres ou filaments en raison de la viscosité de ces résines.

Parmi les procédés utilisés pour tenter de remédier à cet inconvénient, on a déjà proposé la postimprégnation de tissus, par passage dans un bain contenant la matrice thermoplastique dans un solvant adéquat. Les inconvénients de ce procédé son bien connus et sont ceux liés à l'utilisation de solvants, à savoir, la nécessiter de récupérer le solvant, le risque de ne pas le récupérer totalement et les problèmes d'hygiène. En outre et ce qui est peut-être le plus gênant, c'est que les résines les plus performantes sont inertes par rapport aux principaux solvants.

On a également proposé d'incorporer la matrice thermoplastique par un procédé de tissage connu sous le nom de "Comingle" selon lequel on tisse un mélange de fibres de renforts et de fibres matrice. Après le tissage, le tissu est chauffé pour faire fondre la matrice se présentant sous forme de fibres, puis est comprimé pour obtenir la pièce souhaitée. Pendant le chauffage, et au cours de la compression, il est nécessaire que la matrice se trouvant sous forme de fibre fonde, puis migre pour pénétrer entre les fibres de renfort. Il n'est pas évident d'obtenir de cette façon, une répartition homogène de la matrice.

Différentes solutions ont été proposées pour tenter de remédier à cet inconvénient et pour permettre de réduire le taux de vide. C'est ainsi que dans les EP-B1-0 226 420, EP-B1-0 354 139, EP-B1-0 466 618, on a proposé de former des fils comprenant un mélange de fibres ou de filaments de renfort tel que verre, aramide, carbone, avec des fibres de matière thermoplastique. Une fois ces fils disposés dans un moule de manière à former la structure de renfort désirée, la matière thermoplastique du fil est fondue pour former la matrice, de sorte que les fibres ou filaments de renfort mélangés aux fibres de matière thermoplastique se trouvent noyés dans la matrice thermoplastique. Etant donné que les fibres thermoplastiques sont mélangées intimement dans le fil composite aux libres ou filaments de renfort, le taux de vide du matériau composite obtenu est faible.

L'inconvénient de cette solution est que le coût de production d'un tel fil composite est cher, de sorte qu'il s'agit là d'une solution tout au plus réservée à de rares applications pour quelques produits haut de gamme ou de technologies avancées. Par contre son prix ne rend pas cette solution compétitive pour la plupart des applications où l'on continue d'utiliser la technique conventionnelle par enduction susmentionnée.

On a déjà proposé d'introduire la matrice sous forme de poudre dans un fil ou dans une masse fibreuse constituée par un tissu ou par un non-tissé. C'est ainsi que l'on a proposé un procédé selon lequel on imprègne de poudre de faible granulométrie un fil dans un lit fluidisé où la poudre est maintenue en suspension. Le fil poudré est ensuite revêtu d'une gaine de matière thermoplastique de nature compatible avec celle de la poudre. Ce procédé, connu sous le nom de FIT, est utilisé pour la fabrication d'un préimprégné souple susceptible d'être tissé. Il faut cependant noter que la souplesse du préimprégné dépend de l'épaisseur de la gaine extrudée. Si cette gaine est très fine, le préimprégné est effectivement souple, mais la gaine est fragile, si la gaine est épaisse elle est moins fragile mais le préimprégné est alors moins souple.

Pour que ce préimprégné conserve sa souplesse il faut que la poudre ne fonde pas à l'intérieur de la gaine. De ce fait, elle peut migrer dans le fil au cours des manipulations. Le polymère qui constitue la gaine et qui, dans le produit final, contribuera à la formation de la matrice ne pourra participer à la cohésion du produit final que si il migre suffisamment entre les fibres de renfort et que si il est soumis à une compression suffisamment élevée.

Une autre catégorie de technique utilise des mats de fibres de verre notamment. Ces mats sont imprégnés par du polymère fondu, par calandrage de films thermoplastiques, par moulage à la presse en compression de films de résine et de mats, par coulée de polymère fondu entre deux mats pris en sandwich par deux films calandrés de polymère ou encore par projection électrostatique de résine en poudre sur le mat, suivie de la fusion de la matrice et compression de l'ensemble.

Enfin, on peut mentionner la technique papetière qui consiste à couper les fibres et à les disperser avec une résine thermoplastique en poudre dans une grande quantité d'eau, puis à filtrer l'eau pour obtenir un feutre. Ce feutre est chauffé et comprimé pour faire fondre la résine. Toutefois cette technique est limitée à l'utilisation de fibres courtes donnant un composite dont les propriétés mécaniques sont moins bonnes qu'avec des fibres longues.

On a déjà proposé d'utiliser un champ électrostatique pour répartir de la poudre sur ou dans un substrat lorsque celui-ci est poreux.

C'est ainsi notamment que le WO-92/15404 se rapporte à un procédé de fabrication de substrats de circuits électroniques selon lequel on revêt des faisceaux de fibres par de la poudre thermoplastique par voie électrostatique, on fond cette poudre pour que la matière liquide pénètre à l'intérieur des faisceaux et enrobe les filaments. Pour accroître la conductivité électrique des filaments, on les humidifie. La quantité de résine est comprise entre 35 et 70% en poids du matériau composite.

Comme on peut le constater, ce procédé ne permet pas d'introduire de la poudre entre les fibres ou les filaments, étant donné que la pénétration de la matière plastique est obtenue par infiltration de celle-ci à l'état liquide avec tous les problèmes évoqués ci-dessus.

Dans le US 3'817'211, des faisceaux de filaments continus sont amenés dans un lit fluidisé de poudre chargée électrostatiquement, en passant eux-mêmes sur des électrodes pour les charger à un même potentiel de signe opposé à celui de la poudre. Les filaments ainsi chargés électrostatiquement se repoussent et permettent à la poudre attirée par eux de pénétrer entre les filaments et d'adhérer à eux. Pour améliorer le chargement électrostatique des filaments, on les humidifie. Chaque filament du faisceau de filaments peut ainsi être revêtu individuellement. Selon ce document, les filaments ainsi revêtus de poudre sont disposés en faisceaux et des tissus peuvent ensuite être fabriqués à l'aide de ces faisceaux poudrés. Un tel procédé n'est donc pas applicable directement sur un tissu ou un non-tissé. Il n'est pas applicable non plus à des filés de fibres, mais ne peut l'être que sur des filaments continus.

Il a déjà été proposé dans le US-2'820'716 d'introduire un liant dans un non-tissé, selon lequel on charge la poudre à un potentiel et on l'amène vis-à-vis d'une électrode de potentiel opposé en interposant le non-tissé entre la poudre et l'électrode, de sorte que la poudre, attirée par l'électrode, pénètre dans le non-tissé qui se trouve sur sa trajectoire. La poudre est ici, de préférence, un liant thermoplastique ramolli par chauffage puis refroidi pour lier les fibres du voile non-tissé entre eux. Compte tenu du but poursuivi par cette invention, la quantité de liant incorporée dans le non-tissé ne peut en aucun cas l'être dans des proportions aptes à la réalisation d'une matrice pour matériau composite, sinon les fibres ou filaments du non-tissé ne seraient pas liés par le liant, mais noyées dans celui-ci. Ce ne serait alors plus un non-tissé, le rôle du liant étant, comme son nom l'indique, uniquement de donner une cohésion au non-tissé en liant les fibres ou filaments aux points de contact.

On a encore proposé dans le EP-B1-0 502 900 un procédé de frittage d'un matériau composite selon lequel on charge et on mélange électrostatiquement des poudres de matériau polymère et/ou de matériau minéral auxquelles une poudre métallique est ajoutée. On saupoudre des fibres de renfort avec ce mélange de poudre en procédant éventuellement à l'empilage de plusieurs couches successives saupoudrées et on procède à un nouveau traitement électrostatique pour faire pénétrer la poudre dans le réseau fibreux.

Outre le fait que ce procédé ne s'applique qu'à un mélange de poudre de natures différentes, on constate surtout la nécessité de charger tout d'abord la poudre, on saupoudre ensuite un tissé à l'aide de cette poudre, on empile différentes couches de tissu ainsi poudrées et on les soumets alors à un champ électrostatique en vue de faire pénétrer la poudre répandue sur les différentes couches par saupoudrage, dans le réseau fibreux.

Le but de la présente invention est d'apporter une solution qui permette de répartir de la matière en poudre destinée à former une matrice d'un matériau composite renforcé par des fibres ou des filaments, à l'intérieur d'une masse fibreuse ou filamenteuse, de manière à offrir un procédé économique et performant, susceptible de remédier, au moins partiellement, aux inconvénients des solutions connues de l'art antérieur.

A cet effet la présente invention a pour objet un procédé pour produire un matériau composite comprenant un réseau de fibres ou de filaments et une matrice continue, rigide ou flexible, avec laquelle ledit réseau est en contact intime, selon lequel ladite matrice est incorporée dans ledit réseau sous forme de poudre avant d'être transformée pour former ladite matrice continue, selon la revendication 1. Elle a également pour objet le matériau composite obtenu selon la revendication 15, ainsi qu'une préforme pour matériau composite à matrice thermoplastique obtenue selon le procédé de la revendication 14.

De manière inattendue, les inventeurs ont découvert un procédé, objet de la présente invention, selon lequel il est possible de faire pénétrer dans un réseau fibreux ou filamenteux tissé ou non-tissé une quantité de poudre apte à la formation d'une matrice pour matériau composite rigide ou flexible, en soumettant simultanément la poudre et le réseau fibreux ou filamenteux à un champ électrostatique sous une tension supérieure à 20 kV pendant une durée d'au moins 5 secondes.

Contrairement à ce que peuvent faire croire les documents de l'art antérieur, l'apport de la quantité appropriée de poudre jusqu'à l'intérieur du matériaux fibreux ou filamenteux, même lorsque celui-ci est d'une épaisseur relativement importante peut être obtenu directement sur le tissu ou le non-tissé, tout au moins sur certains types de tissu et de non-tissés.

Les résultats obtenus permettent d'envisager la production de matériaux composites dont les propriétés mécaniques sont d'ores et déjà comparables à celles des produits obtenus par des procédés classiques. Par contre, la mise en oeuvre de ce procédé qui est susceptible d'être réalisée en ligne, devrait permettre une réduction des coûts de fabrication et de mise en oeuvre du matériau.

De préférence, la tension du champ électrostatique appliqué est une tension alternative comprise entre 20 et 150 kV. Avantageusement, la granulométrie de la poudre est inférieure à 200 µm, de préférence à 60 µm. De préférence également, on utilisera des surfaces ou volumes textiles de contexture à porosité adaptée, sous forme de non-tissés, de tissus, de tricots, de tresses ou autres.

Les avantages de la solution proposée résident notamment dans le fait que l'opération d'imprégnation de la poudre dans la masse fibreuse peut être réalisée en une seule opération. Une fois la masse fibreuse ou filamenteuse imprégnée, il suffit alors de la soumettre à une opération de chauffage à une température à laquelle la matière thermoplastique en poudre fond puis à refroidir. Bien entendu, suivant la forme désirée pour la pièce en matériau composite, l'opération de chauffage peut être réalisée dans un moule destiné à donner à ce matériau la forme de la pièce souhaitée. On peut d'ailleurs parfaitement envisager d'effectuer le poudrage selon la présente invention sur une masse fibreuse ou filamenteuse préformée. Au vu de l'imprégnation de la poudre dans la masse fibreuse, une pression faible sera exercée lors du moulage, pour faire fluer la matière thermoplastique en fusion lors de cette opération de chauffage, étant donné que la matière de la matrice thermoplastique a déjà été répartie à l'intérieur de la masse fibreuse ou filamenteuse lors de l'opération de poudrage électrostatique objet de la présente invention.

D'autres particularités et avantages de la présente invention apparaîtront à la lecture de la description qui va suivre et des exemples qui l'illustreront.

Les exemples qui seront décrits par la suite ont tous été réalisés à l'aide d'une installation prototype en utilisant deux plaques métalliques superposées et parallèles connectées aux deux pôles respectifs d'un générateur électrostatique et forment ainsi deux électrodes destinées à engendrer un champ électrostatique entre elles. Les faces respectives disposées vis-à-vis l'une de l'autre de chacune de ces plaques métalliques sont recouvertes d'une plaque vitrocéramique isolante. La poudre destinée à imprégner le réseau de fibres ou de filaments en vue de la formation d'un matériau composite est de préférence répartie uniformément sur la plaque isolante recouvrant la plaque métallique inférieure. Elle peut également l'être aussi sur le réseau fibreux à imprégner lui-même, notamment lorsque celui-ci est épais et/ou de contexture relativement serrée. Le réseau de fibres ou de filaments est disposé au-dessus de la poudre entre les deux électrodes.

La distance entre les plaques métalliques formant les électrodes peut varier de 1 à 50 mm. La distance inter-électrodes permet de faire varier l'intensité de 5 mA à 50 mA. En effet, lorsque la distance inter-électrodes augmente, la capacité du condensateur formé par les deux plaques métalliques diminue, ce qui abaisse la charge, donc l'intensité.

Parmi les autres paramètres étudiés pour la mise en oeuvre du procédé selon la présente invention, on a pu constater à tension égale, que l'on obtenait de meilleurs résultats avec une tension alternative qu'avec une tension continue. La nature, la granulométrie de la poudre, ainsi que le rapport densité/granulométrie sont aussi des paramètres qui ont une importance dans les résultats obtenus. Il est évident par ailleurs que la poudre ne doit pas avoir tendance à s'agglomérer, si on veut garantir la meilleure pénétration de cette poudre à l'intérieur du réseau de fibres ou de filaments. On a pu constater qu'il pouvait être utile avec certaines poudres de lui ajouter un additif destiné à améliorer sa fluidité. C'est ainsi que le fabricant de poudre a ajouté 0,3% en poids d'alumine pour empêcher qu'elle ne s'agglomère, cet additif étant connu sous le nom d'agent "anti-mottant", à une poudre de polyamide 12 vendue sous la marque Orgasol® par la société Atochem. On a également pu constater qu'il était plus difficile d'obtenir de bons résultats avec des poudres dont la granulométrie est supérieure à 60 µm. Des essais réalisés, il semblerait que la granulométrie de la poudre doit être d'autant plus faible que la densité de la matière est élevée.

Parmi les autres facteurs qui ont pu être mis en évidence, on peut encore citer le fait que l'on a pu constater une amélioration de l'imprégnation de la poudre dans le réseau de fibres ou de filaments lorsque l'on désensime ces fibres ou filaments avant de les soumettre à l'opération de poudrage électrostatique. L'ensimage a en effet tendance à coller les fibres ou les filaments entre eux et à empêcher de ce fait leur écartement.

Un autre paramètre qui a été étudié est celui du temps de traitement. Il n'a pas été possible de constater des différences notables dans la quantité de poudre incorporée dans un réseau de fibres ou de filaments donné, à partir de 10 secondes d'application du champ électrostatique avec tension alternative ou continue. Il n'a pas été possible non plus de constater à l'aide d'un microscope électronique à balayage, une modification de la surface des fibres soumises plus ou moins longtemps (jusqu'à 5 min.) à un tel champ électrostatique.

En revanche, on a pu constater sur les matériaux composites réalisés à l'aide des réseaux fibreux ou filamenteux poudrés selon le procédé objet de la présente invention, une amélioration des propriétés mesurées en fonction de la durée pendant laquelle le champ électrostatique a été appliqué lors du procédé de poudrage électrostatique. On peut supposer que cette amélioration est due soit à une oxydation de la surface des fibres ou filaments lorsque ceux-ci sont soumis au champ électrostatique, ce qui augmenterait l'adhésion fibres-matrice et par conséquent les résultats mécaniques du composite obtenu, soit au fait que la poudre se répartit mieux dans le réseau fibreux en fonction du temps, soit encore à l'association des deux phénomènes.

Les essais que nous avons réalisés à l'aide de l'installation susmentionnée et un générateur de 30 kV, avec tension alternative ont montré que les fibres de matériaux diélectriques, tels que verre, aramide ou polyéthylène HM (Dyneema®) permettent à ces libres ou filaments d'accumuler des charges en surface qui ont tendance à s'opposer au champ qui leur a donné naissance. De ce fait, toutes ces fibres se chargent au même potentiel et ont par conséquent tendance à se repousser les unes les autres facilitant ainsi la pénétration de la poudre.

Dans le cas de fibres conductrices comme les fibres de carbone, il faut envisager d'appliquer une plus forte différence de potentiel, typiquement > 30 kV, pour accumuler suffisamment de charges en surface en vue d'obtenir un effet sur l'écartement des fibres ou des filaments.

Comme on le constate de la discussion qui précède, l'imprégnation de la poudre à l'intérieur d'un réseau de fibres ou de filaments est fonction de divers facteurs parmi lesquels l'écartement entre les fibres qui peut être augmenté voire créé par la répulsion entre les fibres soumises à un champ électrique et la granulométrie de la poudre ont évidemment un rôle important.

Par conséquent, la texture du réseau de fibres ou de filaments joue un rôle. C'est ainsi que les non-tissés ont a priori une texture favorable à l'imprégnation par la poudre dans un champ électrique. Parmi les tissus, il y a lieu de s'orienter de préférence vers des armures dans laquelle les fibres ne sont pas trop serrées, telle qu'un roving par exemple. Si il s'agit d'une armure trop serrée, il est pratiquement exclu de pouvoir écarter suffisamment les fibres pour faire pénétrer la poudre à l'intérieur du tissu. De façon générale, plus le fil multifilament ou le filé de fibres utilisé est fin plus le tissu obtenu sera serré. C'est ainsi qu'une armure toile peut être serrée avec un fil fin, mais qu'avec un gros multifilament, de verre notamment, compte tenu de la texture 1.1 de la toile, il n'est pas possible d'obtenir un tissu très serré avec un multifilament de verre relativement gros.

Le grammage du tissu a moins d'importance que sa texture. On peut tout de même mentionner que l'on a constaté de meilleurs résultats avec des tissus dont le grammage est > 300 g/m². Ceci provient sans doute du fait que les tissus dont le grammage est inférieur à cette valeur sont souvent constitués de fils fins très serrés.

Parmi les tissus que nous avons testés, nous avons obtenus des résultats très intéressants avec un tissu de fibres de verre à armure toile de 700 g/m², comprenant 3 fils/cm dans lequel on arrive à bien faire pénétrer la poudre. Il s'agit donc ici d'un tissu réalisé à l'aide d'un gros fil, de sorte que l'armure toile ne conduit pas à un fil très serré qui se laisse bien pénétré par la poudre, lorsqu'il est placé dans un champ électrostatique.

Il a été plus difficile de tester des tissus faits de fibres d'aramide, du fait que ceux qui sont disponibles sur le marché sont généralement très serrés. Par contre les tests réalisés sur des fibres d'aramide seules montrent que pour une armure de tissu semblable, on devrait avoir, en ce qui concerne les quantités et la répartition des poudres, des résultats comparables avec un tissu de verre.

Il n'a pas été possible, avec les matériaux textiles testés, de constater une différence entre ceux qui ont été conditionnés dans une atmosphère présentant un taux d'humidité relative de 65% par rapport à ceux conditionnés dans des conditions d'humidité ambiante où le taux d'humidité peut varier de 30 à 60%. En ce qui concerne la poudre, l'humidification n'est pas souhaitable étant donné qu'elle a tendance à agglomérer la poudre.

Nous allons maintenant examiner quelques exemples de matériaux composites réalisés à l'aide de différents tissus ou non-tissés de renfort dans lesquels de la poudre de matière thermoplastique a été apportée par poudrage à l'aide du procédé objet de la présente invention.

### EXEMPLE 1

On a pris un tissu de fibres de verre à armure toile de 700 g/m² de la firme Vetrotex et on a formés six échantillons. Les résultats correspondent à des moyennes effectuées sur ces échantillons présentant par ailleurs des propriétés cohérentes. La poudre utilisée est une poudre de polyamide 12 vendue sous la marque Orgasol 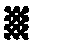 par la firme Atochem. La granulométrie de cette poudre est de 20 µm. Le temps pendant lequel la poudre et le tissu ont été soumis, dans les conditions susmentionnées, au champ électrique est de 30 secondes et la distance des électrodes entre lesquelles sont placés la poudre et le tissu est de 10 mm.

Après avoir procédé à l'opération de poudrage électrostatique, on procède à la fabrication d'une plaque de matériau composite en faisant fondre la poudre répartie entre les fibres du tissu, puis on refroidit le tout jusqu'à ce que le matériau composite soit à la température ambiante. On obtient une plaquette de matériau composite de 2,3 mm d'épaisseur, présentant une masse volumique apparente de 1,97 g/cm³ avec un taux de vide de 0,4%, un pourcentage en masse de résine de 21% correspondant à un taux volumique de 40%. Les propriétés mécaniques mesurées sur ces échantillons sont de 129 MPa pour la contrainte maximum en flexion et de 15,2 GPa pour le module d'élasticité en flexion.

### EXEMPLE 2

On a pris le même tissu et la même poudre que dans l'exemple 1, la distance entre les électrodes est la même, mais la durée pendant laquelle on a soumis la poudre et le tissu de verre au champ électrique de 30 kV en tension alternative est de 2 min.

Les résultats mesurés sont intéressants à observer dans la mesure où seul un paramètre a changé entre cet exemple et le précédent, à savoir la durée. Le nombre d'échantillons dans cet exemple est de 9. La moyenne des résultats montre des résultats quasi identiques pour l'épaisseur 2,3 mm, la masse volumique apparente 1,94 g/cm³, le pourcentage en masse de résine 21% et le taux volumique de matrice 39%. On relève un taux de vide légèrement supérieur 1,6%, mais surtout une sensible amélioration de la contrainte maximum en flexion qui s'élève à 151 MPa ainsi qu'une amélioration du module d'élasticité en flexion qui est de 16,5 GPa. Cet exemple permet de confirmer ce qui a été dit précédemment, à savoir la constatation d'une amélioration des propriétés mécaniques mesurées sans que ni le taux de poudre varie ni le taux de vide qui est même un peu plus élevé, ce qui tendrait à faire penser que c'est du côté de l'adhérence entre les fibres et la matrice que l'on obtient une amélioration, bien que ceci ne soit pas prouvé par un indice mesurable en l'état actuel des essais effectués.

Outre les deux exemples susmentionnés réalisés à l'aide de tissus de fibres de verre à partir desquels on a réalisé des plaques de matériaux composites, afin de mesurer leurs propriétés mécaniques, on a réalisé également une série de tests de poudrage électrostatique exclusivement avec des non-tissés de fibres de verre pour comparer le pourcentage en masse de poudre par rapport à la masse de matériau fibreux. On a également fait des essais en superposant jusqu'à cinq couches de non-tissé afin de voir si il était possible d'introduire de la poudre dans une telle épaisseur de masse fibreuse. Le non-tissé avec lequel les essais ont été réalisés est un non-tissé de fibres de verre de la firme Vetrotex, vendu sous la dénomination commerciale Unifilo®. Il s'agit d'un non-tissé de 330 g/m² qui a été aiguilleté et dont plusieurs couches ont été assemblées par aiguilletage.

### EXEMPLE 3

Cet exemple a été réalisé à l'aide d'une couche du non-tissé susmentionné et de la poudre de polypropylène (PP) vendue sous la dénomination commerciale Coathylène® par Plast-Labor S.A. et dont la granulométrie se situe entre 38 et 98 µm. Le rapport de masse initial entre la poudre et le non-tissé était de 1,35. La poudre et le non-tissé ont été soumis durant 1 min. au champ électrostatique de 30 kV sous tension alternative et la distance séparant les électrodes entre lesquelles on a disposé la poudre et le non-tissé comme indiqué précédemment est de 10 mm. On a mesuré un pourcentage de 42% de poudre dans le non-tissé ce qui constitue une quantité tout à fait satisfaisante. En outre le répartition observée de la poudre dans le non-tissé est bonne.

### EXEMPLE 4

Cet exemple a été fait sur deux couches de non-tissé Unifilo® de 330 g/m² chacune à l'aide de la poudre PA 12 susmentionnée utilisée pour les exemples 1 et 2 et broyée au tonneau. Les conditions de traitement étaient les mêmes que dans l'exemple 3. Le rapport initial de masse poudre/non-tissé est de 1. Le pourcentage de poudre mesuré dans le non-tissé est de 32,30% avec une bonne répartition de la poudre à l'intérieur du non-tissé.

### EXEMPLE 5

Cet exemple est identique au précédent, mais la poudre utilisée est, dans ce cas, la poudre de PP dans un rapport de masse initial avec le non-tissé de 1,13. La proportion de

### EXEMPLE 6

On a utilisé dans cet exemple, trois couches superposées aiguilletée ensemble du non-tissé des exemples 3 à 5 que l'on a poudrées selon le procédé de poudrage électrostatique objet de la présente invention, avec de la poudre de PP, dans un rapport de masse initial avec le non-tissé de 1. Les autres conditions sont identiques à celles des exemples 3 à 5. La proportion de poudre mesurée dans le tissu est de 42% avec une bonne répartition de la poudre à l'intérieur du non-tissé. Cet exemple peut être considéré comme très intéressant et il montre qu'il est parfaitement possible d'infiltrer de la poudre par le procédé objet de la présente invention dans une masse fibreuse de 960 g/m².

### EXEMPLE 7

Cet exemple a été réalisé avec cinq couches superposées et aiguilletées du même non-tissé que dans les exemples précédents, ce qui représente une masse de 1650 g/m². Dans cet exemple, la masse initiale de poudre était dans un rapport de 1/1 avec celle du non-tissé, mais elle a été répartie pour moitié au-dessous du non-tissé et pour moitié au-dessus. Les autres paramètres de durée et de distance étaient semblables à ceux des exemples 3 à 6. La proportion de poudre mesurée s'élève à 44% ce qui est excellent et la répartition observée à l'intérieur des couches est bonne.

Les exemples effectués ont été limités notamment par les poudres disponibles sur le marché ainsi que par les tissus ou les non-tissés. Toutefois, les résultats obtenus jusqu'ici permettent de prouver la faisabilité de ce procédé et de voir quels sont les principaux paramètres nécessaires à la mise en oeuvre de ce procédé. Il est bien évident que l'invention n'est nullement limitée aux exemples qui précèdent mais peut au contraire s'étendre à d'autres matériaux textile, notamment à des tricots, à d'autres fibres ou filaments de renfort et à d'autres types de poudres, telles que les poudres de céramique pour la réalisation de matrices par frittage.

Jusqu'ici, le procédé selon l'invention a été décrit comme un procédé destiné à apporter en une opération la quantité de poudre nécessaire pour réaliser la matrice thermoplastique.

Selon une variante de ce procédé, il est également possible, dans certains cas, d'apporter cette matrice en deux étapes, une première étape étant constituée par un poudrage qui n'est pas forcément réalisé par voie électrostatique. En effet, le rôle de cette première étape est d'apporter une quantité de poudre non suffisante pour réaliser la matrice, mais suffisante pour permettre de faire une préforme de la pièce à réaliser, le rôle de cette poudre étant de permettre au réseau de fibres ou de filaments de conserver, après refroidissement, la forme de la pièce désirée. Ensuite, au cours de la seconde étape, on soumet cette préforme à une opération de poudrage électrostatique, comme décrit précédemment, en vue d'apporter dans cette préforme le reste de quantité de poudre nécessaire pour réaliser la matrice.

## Revendications

1. Procédé pour produire un matériau composite comprenant un réseau de fibres ou de filaments et une matrice continue, rigide ou flexible, avec laquelle ledit réseau est en contact intime, selon lequel ladite matrice est incorporée dans ledit réseau sous forme de poudre avant d'être transformée pour former ladite matrice continue, caractérisé en ce que l'on place la poudre, d'une part et ledit réseau de fibres ou de filaments, d'autre part, dans un champ électrostatique dont la tension est d'au moins 20 kV pendant une durée d'au moins 5 s.

2. Procédé selon la revendication 1, caractérisé en ce que la tension dudit champ électrostatique est une tension alternative comprise entre 20 et 150 kV.

3. Procédé selon l'une des revendications précédentes, caractérisé en ce que la granulométrie de la poudre est inférieure à 200 µm.

4. Procédé selon l'une des revendications précédentes, caractérisé en ce que lesdits fibres ou filaments sont en un matériau dont le module de Young est supérieur à 50 GPa.

5. Procédé selon l'une des revendications précédentes, caractérisé en ce que ledit réseau de fibres ou de filaments est sous forme d'un non-tissé.

6. Procédé selon l'une des revendications 1 à 4, caractérisé en ce que ledit réseau de fibres ou de filaments est sous forme d'un tissu.

7. Procédé selon l'une des revendications 1 à 4, caractérisé en ce que ledit réseau de fibres ou de filaments est sous forme d'un tricot.

8. Procédé selon l'une des revendications 1 à 4, caractérisé en ce que ledit réseau de filament est sous la forme d'un roving.

9. Procédé selon l'une des revendications précédentes, caractérisé en ce que ledit réseau de fibres ou de filaments est soumis à une opération préalable de désensimage.

10. Procédé selon l'une des revendications précédentes, caractérisé en ce que l'on ajoute à ladite poudre un additif destiné à réduire sa tendance à coller et à s'agglomérer.

11. Procédé selon l'une des revendications précédentes, caractérisé en ce que l'on place ledit réseau de fibres ou de filaments entre deux sources de poudre.

12. Procédé selon l'une des revendications précédentes, caractérisé en ce que ledit réseau de fibres ou de filaments est compris entre 300 et 3000 g/m².

13. Procédé selon l'une des revendications précédentes, caractérisé en ce que ladite matrice continue est en un matériau thermoplastique.

14. Procédé selon l'une des revendications précédentes, caractérisé en ce que l'on incorpore ladite matrice tout d'abord en incorporant une quantité de matière thermoplastique en poudre apte à former une préforme, puis on place ladite préforme dans ledit champ électrostatique avec ladite poudre pour incorporer le reste de la quantité de poudre nécessaire à la formation de ladite matrice.

15. Matériau composite obtenu par le procédé selon l'une des revendications précédentes, caractérisé en ce que le taux volumique de la matrice est compris entre 5 et 90%.

16. Matériau composite obtenu selon l'une des revendications 1 à 14, caractérisé en ce qu'il présente un module d'élasticité en flexion supérieur à 12 GPa et une contrainte maximum en flexion supérieure à 120 MPa.

17. Matériau composite obtenu selon l'une des revendications 1 à 14, caractérisé en ce qu'il présente un taux de vide inférieur à 3%.

18. Préforme pour matériau composite à matrice thermoplastique obtenue selon le procédé de la revendication 14.
